# EUROPEAN PATENT APPLICATION

(11) **EP 1 918 740 A1**
(43) Date of publication of application: **07.05.2008**
(21) Application number: 06767843.3
(22) Date of filing: 04.07.2006
(51) Int. Cl.: G02B 5/08

(54) **LAMINATED BODY FOR REFLECTION FILM**

(30) Priority: 29.07.2005 JP 2005220927; 27.04.2006 JP 2006123827
(71) Applicant: Asahi Glass Company, Limited, Chiyoda-ku Tokyo 100-8405 (JP)
(72) Inventor: HIRUMA, Takehiko, Asahi Glass Fine Techno Co., Ltd, Yonezawa-shi, Yamagata 9921128 (JP); SHIN, Naoko, Asahi Glass Company, Limited, Chiyoda-ku, Tokyo 1008405 (JP)
(74) Representative: Müller-Boré & Partner Patentanwälte
(86) International application number: PCT/JP2006/313326
(87) International publication number: WO 2007/013269

(57) **Abstract**

To provide a laminate having a high reflectance in the entire visible region and having excellent durability such as moisture resistance and salt water resistance.

A laminate comprising a substrate, and a silver film, an adhesion-improving film, a low refractive index film and a high refractive index film formed in this order on the substrate, wherein at least a layer on the adhesion-improving film side in the low refractive index film is formed by a radio frequency sputtering method by means of an oxide target using a sputtering gas containing nitrogen, the adhesion improving film has an extinction coefficient of at most 0.1 and has a thickness of from 0.5 to 4 nm, the low refractive index film has an extinction coefficient of at most 0.01, and the high refractive index film has an extinction coefficient of at most 0.01.

## Description

### TECHNICAL FIELD

The present invention relates to a laminate used mainly for a reflection member for a projection TV.

### BACKGROUND ART

Heretofore, as a reflection mirror to be used for electronic equipment such as a display, a mirror utilizing a metal film for reflection has been widely used. For improvement of brightness of the electronic equipment and for energy saving, it is important to increase the reflectance of the reflection mirror. For example, in a liquid crystal display used for e.g. a cell-phone, a mirror which reflects backlight is used, and for the mirror, a film is used as a substrate for weight saving, and a reflection mirror having a high reflectance is required. Further, to project an image on a large screen of e.g. a projection TV, a plurality of reflection mirrors are required in an optical system, and accordingly the quantity of light tends to decrease as the number of reflection increases. Consequently, the finally obtained quantity of light tends to be small, and the brightness of the image tends to decrease. Thus, a reflection mirror having a higher reflectance than ever has been desired.

Heretofore, aluminum has been used as the material of the metal film. However, when aluminum is used as the material of the metal film, the reflectance tends to change depending upon the angle of incidence of light, whereby the reflected colors tend to vary.

To solve the above problems, silver having a higher reflectance in the visible region than aluminum has been used as the material of the metal film. However, although silver has a high reflectance in the visible region as compared with aluminum, its durability such as moisture resistance and salt water resistance tends to be poor, its film tends to be weak and is likely to be scarred due to poor adhesion to a substrate.

As a mirror using a Ag film as the metal film, and having a high reflectance and excellent durability, a laminate comprising an Al₂O₃ film, a Ag film, an Al₂O₃ film and a TiO₂ film laminated in this order on a glass substrate has been disclosed (e.g. Patent Document 1). However, this laminate has such a problem that since oxygen is introduced when the Al₂O₃ film on the opposite side of the Ag film from the substrate is produced, silver is likely to be oxidize, thus lowering the reflectance.

Further, to improve adhesion between the Ag film and the substrate, a reflection film having a metal such as Ce or Nd mixed with Ag has been disclosed (e.g. Patent Document 2). However, since the reflection film is a single film of silver, only adhesion between the Ag film and the substrate is disclosed, and adhesion of the Ag film to another layer is not evaluated at all.

Further, a reflection mirror comprising an Al₂O₃ film, a ZrO₂ film and a SiO₂ film formed on a Ag film has been disclosed (e.g. Patent Document 3). It is disclosed that the Al₂O₃ film is a protective film to increase durability of the Ag film, the ZrO₂ film is a film to improve reflection efficiency, and the SiO₂ film is a protective film. Further, it has been disclosed to form a film made of chromium oxide between the substrate and the Ag film so as to improve adhesion between the substrate and the Ag film (e.g. Patent Document 4). Further, it has been disclosed to form an Al₂O₃ film on the Ag film, and to provide a layer of e.g. zirconium oxide, silicon dioxide, titanium oxide, hafnium oxide, tin oxide, antimony oxide or tungstic oxide so as to further improve durability (e.g. Patent Document 5). Further, it has been disclosed to provide an underlayer made of silicon oxide between the substrate and the Ag film so as to improve durability (e.g. Patent Document 6). However, such reflection films have a problem in that the reflectance in the visible region is low.
Patent Document 1: JP-A-2003-4919
Patent Document 2: JP-A-2002-226927
Patent Document 3: JP-A-5-127004
Patent Document 4: JP-A-2000-81505
Patent Document 5: JP-A-2000-241612
Patent Document 6: JP-A-2001-74922

### DISCLOSURE OF THE INVENTION

### OBJECT TO BE ACCOMPLISHED BY THE INVENTION

The object of the present invention is to provide a laminate having a high reflectance in the entire visible region, and being excellent in durability such as moisture resistance and salt water resistance and adhesion.

### MEANS TO ACCOMPLISH THE OBJECT

The present invention provides the following:
(1) A laminate comprising a substrate, and a silver film, an adhesion-improving film, a low refractive index film and a high refractive index film formed in this order on the substrate, wherein at least a layer on the adhesion-improving film side in the low refractive index film is formed by a radio frequency sputtering method using a sputtering gas containing nitrogen, the adhesion-improving film has an extinction coefficient of at most 0.1 and has a thickness of from 0.5 to 4 nm, the low refractive index film has an extinction coefficient of at most 0.01, and the high refractive index film has an extinction coefficient of at most 0.01.
(2) A process for producing a laminate which comprises laminating a silver film, an adhesion-improving film, a low refractive index film and a high refractive index film in this order on a substrate, wherein at least a layer on the adhesion-improving film side in the low refractive index film is formed by a sputtering method using a sputtering gas containing no oxygen, the adhesion-improving film has an extinction coefficient of at most 0.1 and has a thickness of from 0.5 to 4 nm, the low refractive index film has an extinction coefficient of at most 0.01, and the high refractive index film has an extinction coefficient of at most 0.01.

The thickness in the present invention means a geometrical thickness.

### EFFECTS OF THE INVENTION

The laminate of the present invention has an increased reflectance in the visible region since silver is used as the material of the metal film, and is excellent in durability also and is thereby useful as an optical member for a display, and contributes to improvement of brightness of the display and easy optical design. Further, the laminate of the present invention requires no formation of an extra layer to prevent oxidation and is thereby excellent in productivity. Further, it has a high reflectance and is excellent in durability such as moisture resistance and is thereby useful particularly as an optical member for a rear projection TV in which the number of reflection is large.

### BRIEF DESCRIPTION OF THE DRAWING

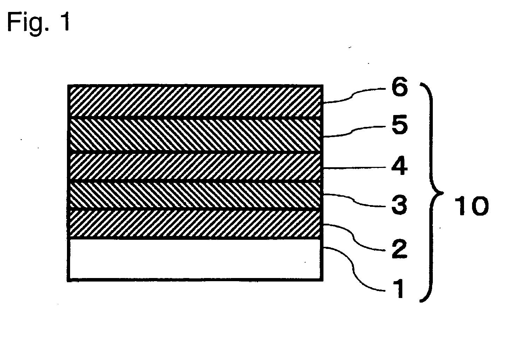

Fig. 1 is a cross-section illustrating a laminate of the present invention.

### MEANINGS OF SYMBOLS

- 1:: substrate
- 2:: underlayer
- 3:: silver film
- 4:: adhesion-improving film
- 5:: low refractive index film
- 6:: high refractive index film
- 10:: laminate

### BEST MODE FOR CARRYING OUT THE INVENTION

In the laminate of the present invention, the type of the substrate is not particularly limited, and for example, 1) glass such as soda lime glass or 2) a film of a PET (polyethylene terephthalate) resin, an acrylic resin, a polycarbonate or the like may be mentioned. Use of glass is preferred in that warpage or bend is less likely to occur even with a large area, and use of a film is preferred in view of weight saving. The thickness of the substrate is, in a case where the substrate is glass, preferably from 0.4 to 8.0 mm in view of strength of the laminate and easy handling. In a case where the substrate is a film, it is preferably from 30 to 500 µm in view of weight saving.

The shape of the substrate is not particularly limited so long as it is a shape required for various optical members for reflection, such as a plane mirror, a concave mirror, a convex mirror and a trapezoidal mirror. In a case where the laminate of the present invention is formed by a sputtering method, as a film formed by a sputtering method is excellent in film uniformity as compared with a film formed by a deposition method or the like, it is possible to form a film on a large substrate. For example, film deposition is possible even on a substrate having an area as large as from 0.1 to 5 m², such being useful particularly as an optical member for a large area rear projection TV.

The silver film which effectively reflects light is a film containing silver as the main component and preferably contains silver in an amount of at least 90 at% in view of the reflectance in the visible region. By using the silver film, the reflectance in the visible region can be increased, and the dependence of the reflectance on the angle of incidence can be reduced. The silver film may contain impurities such as copper, but their content is preferably at most 10 at%. In the present invention, the "visible region" means a wavelength region of from 400 to 700 nm.

Further, the silver film may be a film of an alloy of silver and other metal. Such other metal may, specifically, be Au. An alloy film with Au is preferred, whereby durability of the silver film will improve. The content of other metal in the alloy film is preferably from 0.5 to 10 at% in view of improvement of durability. Further, the silver content in the alloy film is preferably at least 90 at% in view of the reflectance in the visible region.

The thickness of the silver film is preferably from 60 to 200 nm, particularly preferably from 80 to 120 nm. If it is less than 60 nm, the reflectance in the visible region tends to decrease, and if it exceeds 200 nm, light absorption will occur due to irregularities on the surface, and consequently the reflectance in the visible region tends to decrease.

The low refractive index film of the present invention preferably has a refractive index at a wavelength of 550 nm of from 1.35 to 1.75. Further, the low refractive index film is required to be a transparent film in view of reflectance, and specifically, its extinction coefficient in the visible region (hereinafter referred to simply as an extinction coefficient) is at most 0.01, preferably at most 0.008, particularly preferably at most 0.005. The material of the low refractive index film is specifically preferably an oxide such as silicon oxide in that optical properties are less likely to vary. Further, when the low refractive index film is a silicon oxide film, the silicon content in the silicon oxide film is preferably at least 90 mass% based on all the metal elements (including semiconductor elements, the same applies hereinafter) in the silicon oxide film, whereby a film having a desired refractive index can be obtained. The silicon oxide film may contain other metal such as aluminum. The refractive index means a real part of a complex refractive index, and the extinction coefficient means an imaginary part of a complex refractive index in the visible region, and they can respectively be measured by a spectroscopic ellipsometer (e.g. VASE, manufactured by J.A. Woollam).

In the laminate of the present invention, at least a layer on the adhesion-improving film side in the low refractive index film is formed by a radio frequency sputtering method (hereinafter sometimes referred to as RF sputtering method) by means of an oxide target. By using an oxide target, it is unnecessary to introduce oxygen at the time of forming the low refractive index film, whereby oxidation of the silver film can be prevented.

Here, a laminate having a structure similar to that of the present invention is disclosed in JP-A-2006-010930 (hereinafter referred to as Document 1). In Document 1, the low refractive index film is formed by a reactive sputtering method by means of a metal target. In such a case, the adhesion-improving film also has an antioxidizing function, and it was found that when the adhesion-improving film is thin (e.g. at a level of from 0.5 to 4 nm), the antioxidizing effect is insufficient, and the reflectance of a high reflection mirror tends to be low. Further, it was found that when the film is thick (e.g. thicker than 4 nm), the reflectance of the high reflection mirror tends to be low due to absorption of the adhesion-improving film. Namely, by forming the low refractive index film by an RF sputtering method by means of an oxide target, formation of the low refractive index film can be carried out without introducing oxygen, and it is unnecessary to impart an antioxidizing function to the adhesion-improving film. Accordingly, it is possible to design the thickness of the adhesion-improving film only from the viewpoint of adhesion.

Further, Document 1 proposes formation of an antioxidizing layer to prevent decrease in the reflectance. However, in the present invention, formation of such a new layer like the antioxidizing layer is unnecessary, whereby the present invention is excellent in view of productivity.

In the present invention, at least a layer on the adhesion-improving film side in the low refractive index film is formed in a sputtering gas containing nitrogen gas. At least the layer on the adhesion-improving film side in the low refractive index film means a layer or a part of a layer closer to the adhesion-improving film in the low refractive index film, and in a case where the low refractive index film is formed directly on the adhesion-improving layer, it means a layer or a part of the layer in contact with the adhesion-improving film in the low refractive index film.

When the low refractive index film is formed by a radio frequency sputtering method by means of an oxide target, absorption occurs on the adhesion-improving film even through its degree is very low, whereby the reflectance of the laminate tends to be low. Whereas, by using a gas containing a small amount of nitrogen as the sputtering gas at the time of formation of the low refractive index film, absorption of the adhesion-improving film will be suppressed, whereby the decrease of the reflectance of the high reflection mirror can be prevented. The reason why absorption of the adhesion-improving film is suppressed is not clearly understood at present. It is estimated that when formation of the low refractive index film is carried out by the RF sputtering method by means of an oxide target, it is possible that some degeneration of the adhesion-improving film occurs, and by incorporating nitrogen in the sputtering gas, the degeneration of the film can be suppressed, whereby absorption of the adhesion-improving film will be suppressed.

Addition of nitrogen may be conducted over the entire layers or may be conducted only on some layers on the adhesion-improving film side, in formation of the low refractive index film. The film deposition rate tends to decrease by using a sputtering gas containing nitrogen, and accordingly it is preferred to add nitrogen only to the layer on the adhesion-improving film side, from the viewpoint of productivity. In a case where addition of nitrogen is carried out on the layer on the adhesion-improving film side, the thickness of the layer to which nitrogen is added is preferably from 1 to 5 nm, from the viewpoint of inhibition of absorption of the adhesion-improving film and the productivity. The content of the nitrogen gas in the sputtering gas is preferably from 2 to 20 vol% based on the entire sputtering gas, in view of prevention of absorption of the adhesion-improving film.

The thickness of the low refractive index film is preferably from 25 to 60 nm, particularly preferably from 35 to 50 nm, whereby an optimum reflectance will be obtained. Further, when the low refractive index film is a silicon oxide film, the silicon content in the silicon oxide film is preferably at least 90 mass% based on all the metal and semiconductor elements in the silicon oxide film, whereby a film having a desired refractive index can be obtained. The silicon oxide film may contain other metal such as aluminum.

The low refractive index film may be a single layer or may comprise a plurality of layers. In the case of a plurality of layers, it is preferred that all the layers have a refractive index at a wavelength of 550 nm of from 1.35 to 1.75. When the low refractive index film comprises a plurality of layers, the respective layers must be transparent, and all the layers have an extinction coefficient of at most 0.01, preferably at most 0.008, particularly preferably at most 0.005. Further, the total thickness of the plurality of layers is preferably from 25 to 60 nm, particularly preferably from 35 to 50 nm, whereby an optimum reflectance will be obtained.

The high refractive index film of the present invention preferably has a refractive index at a wavelength of 550 nm of from 1.8 to 2.8. Further, the high refractive index film is required to be a transparent film in view of the reflectance, and specifically, it has an extinction coefficient of preferably at most 0.01, more preferably at most 0.008, particularly preferably at most 0.005. The material of the high refractive index film is specifically preferably at least one member selected from the group consisting of niobium oxide, zirconium oxide, tantalum oxide, hafnium oxide, titanium oxide and tin oxide, in view of the reflectance. It is particularly preferably niobium oxide in view of a high refractive index, a low absorptivity and a high film deposition rate. Further, the material of the high refractive index film may be a composite oxide. The thickness of the high refractive index film is preferably from 35 to 70 nm, particularly preferably from 45 to 65 nm, whereby an optimum reflectance will be obtained. When the high refractive index film is a niobium oxide film, the niobium content in the niobium oxide film is preferably at least 90 mass% based on all the metal elements in the niobium oxide film, whereby a film having a desired refractive index can be obtained.

The high refractive index film may be a single layer or may comprise a plurality of layers. In the case of a plurality of layers, it is preferred that all the layers have a refractive index at a wavelength of 550 nm of from 1.8 to 2.8. When the high refractive index film comprises a plurality of layers, the respective layers must be transparent, and it is preferred that all the layers have an extinction coefficient of at most 0.01, more preferably at most 0.008, particularly preferably at most 0.005. Further, the total thickness of the plurality of layers is preferably from 35 to 70 nm, particularly preferably from 45 to 65 nm, whereby an optimum reflectance will be obtained.

In the present invention, an example wherein a low refractive index film and a high refractive index film are laminated in this order once, has been described above. However, the low refractive index film and the high refractive index film may be laminated in this order several times, not once. By laminating them several times, a laminate having a further improved reflectance can be formed. It is also possible to form a layer which improves durability as the layer farthest from the substrate.

In the laminate of the present invention, it is preferred to form an underlayer on the substrate side of the silver film. By forming the underlayer, it is possible to increase adhesion between the silver film and the substrate, whereby a laminate excellent in durability can be obtained. The material of the underlayer is preferably at least one member selected from the group consisting of an oxide, an oxynitride and a nitride in view of adhesion between the substrate and the silver film, and specifically, it is preferably at least one member selected from the group consisting of zinc oxide, tin oxide, indium oxide, aluminum oxide, titanium oxide, niobium oxide and chromium oxide. Further, silicon oxide is poor in adhesion to silver, but it can be used as an underlayer so long as a silicon oxide film will not be in contact with the silver film. Further, the material of the underlayer may be a composite oxide. The thickness of the underlayer is preferably from 1 to 20 nm, more preferably from 2 to 10 nm, particularly preferably from 3 to 7 nm. If it is less than 1 nm, the effect of improving the adhesion will hardly be obtained, and if it exceeds 20 nm, surface irregularities tend to be significant, thus lowering the reflectance. Further, the underlayer may be a single layer or may comprise a plurality of layers. In the case of a plurality of layers, the total thickness is preferably within the above range.

In a case where the underlayer is a zinc oxide film, the zinc content in the zinc oxide film is preferably at least 90 mass% based on all the metal elements in the zinc oxide film. The zinc oxide film may contain other metal. By containing other metal, adhesion between the substrate and the silver film will further improve. Such other metal may, for example, be aluminum, gallium, tin, titanium or silicon, and the content thereof is preferably from 2 to 10 mass% as calculated as oxides, whereby adhesion between the substrate and the silver film will improve.

In the laminate of the present invention, an adhesion-improving film is provided on the opposite side of the silver film from the substrate. The adhesion-improving film contributes to improvement of moisture resistance of the laminate and in addition, to improvement of adhesion between the low refractive index film and the silver film. The adhesion-improving film has an extinction coefficient of at most 0.1, preferably at most 0.05, particularly preferably at most 0.02, in view of the reflectance. The material of the adhesion-improving film is a material different from the material of the adjacent low refractive index film, and is an oxide having an extinction coefficient of at most 0.1 in view of adhesion between the low refractive index film and the silver film. Specifically, it is preferably at least one member selected from the group consisting of zinc oxide, tin oxide, indium oxide, aluminum oxide and titanium oxide. Further, silicon oxide as the low refractive index film is poor in adhesion to silver, but it can be used as the adhesion-improving film so long as a silicon oxide film will not in contact with the silver film. Further, the material of the adhesion-improving film may be a composite oxide. The thickness of the adhesion-improving film is preferably from 0.5 to 4 nm, particularly preferably from 0.5 to 2 nm. If it is less than 0.5 nm, the effect of improving the adhesion will hardly be obtained, and if it exceeds 4 nm, by absorption of the adhesion-improving film, the reflectance of the laminate will be low. The adhesion-improving film may be a single layer or may comprise a plurality of layers. In the case of a plurality of layers, the total thickness is preferably within the above range.

In a case where the adhesion-improving film is a zinc oxide film, the zinc content in the zinc oxide film is preferably at least 90 mass% based on all the metal elements in the zinc oxide film. The zinc oxide film may contain other metal. By containing other metal, adhesion between the low refractive index film and the silver film will further improve. Such other metal may, specifically, be at least one member selected from the group consisting of gallium, tin, silicon and titanium, and the content of other metal is preferably from 2 to 10 mass% in total as calculated as oxides in view of stress relaxation. Aluminum is unfavorable as other metal, since it has absorption in the visible region.

In a case where the adhesion-improving film is a zinc oxide film containing at least one member selected from the group constituting of gallium, tin and titanium (hereinafter referred to as GSTZO film), it may further contain silicon. By containing silicon, the film is less likely to be reduced, whereby a film having stable optical properties can be formed. The silicon content in the GSTZO film is preferably from 0.05 to 1 mass% based on all the metal elements in the GSTZO film.

In a case where the adhesion-improving film is an indium oxide film, it may further contain other metal. Such other metal is preferably zinc in view of adhesion. An indium oxide film containing zinc has an amorphous structure and is characterized in that a homogeneous film over the entire surface is likely to be formed. Accordingly, it is estimated that when the indium oxide film containing zinc is used as the adhesion-improving film, a homogenous film, even though it is relatively thin, can be formed between the silver film and the low refractive index film, whereby the adhesion will further improve. In such a case, the thickness of the adhesion-improving film is preferably from 0.5 to 4 nm in view of the reflectance. The zinc content in the indium oxide film containing zinc is preferably from 5 to 15 mass% based on all the metal elements in the indium oxide film containing zinc, whereby favorable adhesion and reflectance will be obtained.

The laminate of the present invention has, as described above, a multilayer film comprising the silver film, the adhesion-improving film, the low refractive index film and the high refractive index film formed on one side of the substrate, and it may have such a multilayer film on both sides of the substrate. Further, the structures of the multilayer films on both sides may be the same or different.

Of the laminate of the present invention, the minimum reflectance of incident light upon a film surface of a layer in contact with the air of the laminate (hereinafter referred to as a film surface reflectance) in the entire visible region is preferably at least 93%, particularly preferably at least 94% at an angle of incidence within a range of from 0 to 75°. Particularly, it is preferably at least 93%, particularly preferably at least 94% at an angle of incidence of 5°. Further, the average film surface reflectance in the visible region is preferably at least 97.5%, particularly preferably at least 98% at an angle of incidence within a range of from 0 to 75°. Particularly, it is preferably at least 97.5%, particularly preferably at least 98% at an angle of incidence of 5°. The laminate of the present invention has a high film surface reflectance as described above, and accordingly it will be possible to project an image without deterioration of the brightness even when reflection is repeated in an electronic equipment such as a projection TV. Here, the angle of incidence means an angle to a line vertical to the film surface, and the average film surface reflectance in the visible region is a simple average of the film surface reflectances measured at every 5 nm in a wavelength range of from 400 to 700 nm.

Further, the laminate of the present invention is excellent in that the dependence on the angle of incidence is small (the reflectance is less likely to vary depending upon the angle of incidence of light).

The laminate of the present invention can be formed by a sputtering method by means of a metal target or a metal oxide target. A process for producing the laminate in a case where the laminate has an underlayer, a silver film, an adhesion-improving film, a low refractive index film and a high refractive index film in this order on a substrate, will be described below.

First, on the substrate, 1) an underlayer is formed by a sputtering method by means of a metal oxide target, 2) on this underlayer, a silver film is formed by a sputtering method by means of a target of silver or a silver alloy, 3) on this silver film, an adhesion-improving film is formed by a sputtering method by means of a metal oxide target, 4) on this adhesion-improving film, a low refractive index film is formed by a radio frequency sputtering method by means of an oxide target, and 5) on this low refractive index film, a high refractive index film is formed by a reactive sputtering method by means of a metal oxide target or an oxygen-deficient target of a metal oxide. When 3) the adhesion-improving film is formed, it is preferred to form the adhesion-improving film in an atmosphere in which no oxidative gas such as oxygen is present, so as to prevent oxidation of silver. When the adhesion-improving film is formed, the content of the oxidative gas in the sputtering gas is preferably at most 10 vol%. Further, when 4) the low refractive index film is formed, nitrogen gas is contained in the sputtering gas. The nitrogen content in the sputtering gas is preferably from 2 to 20 vol%. Addition of nitrogen may be conducted over the entire layers or may be conducted only on some layers on the adhesion-improving film side, in formation of the low refractive index film.

The laminate 10 of the present invention comprises, as shown in Fig. 1, a substrate 1, and an underlayer 2, a silver film 3, an adhesion-improving film 4, a low refractive index film 5 and a high refractive index film 6 formed in this order on the substrate 1.

As the sputtering method, a radio frequency (RF) or direct current (DC) sputtering method may be employed. The DC sputtering method includes a pulse DC sputtering method. The pulse DC sputtering method is effective with a view to preventing abnormal electric discharge. Further, as compared with a vapor deposition method, the sputtering method is excellent in that film deposition is possible on a substrate having a large area, and that the deviation of the film surface distribution of the thickness is small, whereby variation of the luminous intensity distribution in the surface is small even when reflection is repeated.

The laminate of the present invention has a very high reflectance and is thereby useful as an optical member which is a reflection member for a light source for a display to be used for a flat panel display, a projection TV, a cell-phone, etc.

### EXAMPLES

Now, the present invention will be described in detail with reference to Examples, but the present invention is by no means restricted thereto.

### EXAMPLES 1 to 4

A soda lime glass substrate having a thickness of 1.1 mm was cleaned and set in a batch-system sputtering apparatus, and as targets, a gallium-doped zinc oxide target (gallium oxide content: 5.7 mass%, zinc oxide content: 94.3 mass%), an Au-doped silver alloy target (Au content: 1 at%, silver content: 99 at%), a silica target (SiO₂ content: 99.9 at%) and an oxygen-deficient niobium oxide target (Nb₂O₅₋ₓ (X=0 to 1)) were respectively set at positions opposing to the substrate, and the interior of the vacuum chamber was evacuated to 8×10⁻⁴ Pa. Then, the following films A) to E) were sequentially formed to obtain a laminate.

### A) Formation of underlayer (zinc oxide film)

By an RF sputtering method, a gallium-doped zinc oxide film was formed in a thickness of 6 nm on the glass substrate in an Ar gas atmosphere at an applied power density of 1.6 W/cm² under a sputtering pressure of 0.3 Pa by means of a gallium-doped zinc oxide target. The substrate was not heated. The composition of the gallium-doped zinc oxide film was equal to the target.

The thickness was measured as follows. Namely, on a separate glass substrate, an underlayer was formed under the same conditions as in Example 1 (only the film deposition time was 10 times), the thickness of the underlayer was measured by a stylus surface profiler DEKTAK3-ST (manufactured by Veeco Instruments), and the thickness of the underlayer was calculated from the measured value. The following thicknesses were measured by the same method.

### B) Formation of silver alloy film

The remaining gas was discharged, and then, by a DC sputtering method, a silver alloy film was formed in a thickness of 100 nm on the underlayer in an Ar gas atmosphere at an applied power density of 1.4 W/cm² under a sputtering pressure of 0.3 Pa by means of an Au-doped silver alloy target. The substrate was not heated. The composition of the silver alloy film was equal to the target.

### C) Formation of adhesion-improving film (zinc oxide film)

The remaining gas was discharged, and then by an RF sputtering method, a gallium-doped zinc oxide film (refractive index at a wavelength of 550 nm: 1.99, extinction coefficient: 0.017) was formed in a thickness of 2 nm on the silver alloy film in an Ar gas atmosphere at an applied power density of 0.5 W/cm² under a sputtering pressure of 0.3 Pa by means of a gallium-doped zinc oxide target. The substrate was not heated. The composition of the gallium-doped zinc oxide film was equal to the target.

### D) Formation of low refractive index film (silicon oxide film)

The remaining gas was discharged, and then, by an RF sputtering method, a silicon oxide film was formed in a thickness of 3 nm as an initial layer of the low refractive index film on the adhesion-improving film by using a gas mixture of Ar and nitrogen (containing no oxygen) in a volume ratio as identified in Table 1 at an applied power density as identified in Table 1 under a sputtering pressure of 0.3 Pa by means of a silica target. The substrate was not heated. Then, the remaining gas was discharged, and then, by an RF sputtering method, a silicon oxide film (refractive index at a wavelength of 550 nm: 1.47, extinction coefficient: 0) was formed in a thickness of 41 nm in an Ar gas atmosphere (containing no oxygen) at an applied power density of 2.4 W/cm² under a sputtering pressure of 0.3 Pa by means of a silica target. The substrate was not heated.

### E) Formation of high refractive index film (niobium oxide film)

The remaining gas was discharged, and then, by a DC sputtering method, a niobium oxide film (refractive index at a wavelength of 550 nm: 2.31, extinction coefficient: 0) was formed in a thickness of 57 nm on the low refractive index film in an atmosphere of a gas mixture of Ar and oxygen (content of oxygen gas in the sputtering gas: 10 vol%) at an applied power density of 3.3 W/cm² under a sputtering pressure of 0.3 Pa by means of a niobium oxide target. The substrate was not heated.

The durability and the reflectance of the formed laminate were evaluated by methods (1) to (4), and the results are shown in Table 2.

### (1) High temperature high humidity test

The formed laminated was cut into a 50 mm square to obtain a sample. The sample was left to stand for 24 hours in an atmosphere at a temperature of 80°C under a relative humidity of 95%, whereupon the delamination and the presence or absence of corrosion were ascertained. In Table 2, ○ represents that no delamination or corrosion was observed, and × represents that delamination and/or corrosion was observed. ○ is practically preferred.

### (2) High temperature test

The formed laminate was cut into a 50 mm square to obtain a sample. The sample was left to stand for 48 hours in an atmosphere at a temperature of 200°C, whereupon delamination and the presence or absence of corrosion were ascertained. In Table 2, ○ represents that no delamination or corrosion was observed, and × represents that delamination and/or corrosion was observed. ○ is practically preferred.

### (3) Adhesion (A)

To the film surface of the formed laminate, an adhesive tape CT-18 (manufactured by Nichiban Co., Ltd.) was strongly bonded manually and rapidly peeled, whereupon the presence or absence of delamination was ascertained. ○: No delamination was observed. ×: Delamination was observed. ○ is practically preferred.

### (4) Film surface reflectance

The film surface reflectance (reflectance in a direction opposite of the silver film from the substrate) of the formed laminate was measured by means of a spectrophotometer U-4000 (manufactured by Hitachi, Ltd.) at an angle of incidence of 5°, and the minimum and average reflectances in the entire visible region were calculated. Here, the angle of incidence means an angle to a line vertical to the film surface. ○: Minimum reflectance of at least 93% and an average reflectance of at least 97.5%, and X: a minimum reflectance less than 93% or an average reflectance less than 97.5%. ○ is practically preferred.

### (5) Adhesion (B)

It was measured in accordance with the cross-cut test as defined in JIS K5600-5-6 (1999). 100 Cross-cut sections with one side of 1 mm were formed on the film surface, and an adhesive tape CT-18 (manufactured by Nichiban Co., Ltd.) was bonded to the cross-cut sections and rapidly peeled, whereupon the presence of absence of delamination was ascertained. ○: No delamination was observed. Δ: Delamination was observed, but not a practically problematic level. ×: Delamination was observed. ○ or Δ is practically preferred, and ○ is more preferred.

### EXAMPLE 5 (Comparative Example)

A laminate was formed in the same manner as in Example 1 except that as the initial layer of the low refractive index film, a silicon oxide film was formed in a thickness of 3 nm by an RF sputtering method in an Ar gas atmosphere (i.e. an atmosphere containing no nitrogen) at an applied power density of 2.4 W/cm² under a sputtering pressure of 0.3 Pa by means of a silica target. The laminate was evaluated in the same manner as in Example 1, and the results are shown in Table 2.

### EXAMPLE 6 (Comparative Example)

A laminate was formed in the same manner as in Example 2 except that no adhesion-improving layer was formed. The laminate was evaluated in the same manner as in Example 1, and the results are shown in Table 2.

### EXAMPLE 7

A laminate was formed in the same manner as in Example 2 except that the thickness of the adhesion-improving film was 1 nm. The laminate was evaluated in the same manner as in Example 1, and the results are shown in Table 2.

### EXAMPLE 8 (Comparative Example)

A laminate was formed in the same manner as in Example 2 except that the thickness of the adhesion-improving film was 5 nm. The laminate was evaluated in the same manner as in Example 1, and the results are shown in Table 2.

### EXAMPLES 9 to 11 (Comparative Examples)

A soda lime glass substrate having a thickness of 1.1 mm was cleaned and set in a batch-system sputtering apparatus, and as targets, a gallium-doped zinc oxide target (gallium oxide content: 5.7 mass%, zinc oxide content: 94.3 mass%), an Au-doped silver alloy target (Au content: 1 at%, silver content: 99 at%), a metal silicon target (SiO₂ content: 99.9 at%) and an oxygen-deficient niobium oxide target (Nb₂O₅₋ₓ (X=0 to 1)) were respectively set at positions opposing to the substrate, and the interior of the vacuum chamber was evacuated to 8×10⁻⁴ Pa. Then, the following films A) to E) were sequentially formed to obtain a laminate.

### A) Formation of underlayer (zinc oxide film)

By an RF sputtering method, a gallium-doped zinc oxide film was formed in a thickness of 6 nm on the glass substrate in an Ar gas atmosphere at an applied power density of 1.6 W/cm² under a sputtering pressure of 0.3 Pa by means of a gallium-doped zinc oxide target. The substrate was not heated. The composition of the gallium-doped zinc oxide film was equal to the target.

### B) Formation of silver alloy film

The remaining gas was discharged, and then, by a DC sputtering method, a silver alloy film was formed in a thickness of 100 nm on the underlayer in an Ar gas atmosphere at an applied power density of 1.4 W/cm² under a sputtering pressure of 0.3 Pa by means of an Au-doped silver alloy target. The target was not heated. The composition of the silver alloy film was equal to the target.

### C) Formation of adhesion-improving film (zinc oxide film)

The remaining gas was discharged, and then, by an RF sputtering method, a gallium-doped zinc oxide film (refractive index at a wavelength of 550 nm: 1.99, extinction coefficient: 0.017) was formed in a thickness as identified in Table 1 on the silver alloy film in an Ar gas atmosphere at an applied power density of 0.5 W/cm² under a sputtering pressure of 0.3 Pa by means of a gallium-doped zinc oxide target (no adhesion-improving film was formed in Example 9). The substrate was not heated. The composition of the gallium-doped zinc oxide film was equal to the target.

### D) Formation of low refractive index film (silicon oxide film)

The remaining gas was discharged, and then, by a pulse DC sputtering method, a silicon oxide film (refractive index at a wavelength of 550 nm: 1.46, extinction coefficient: 0) was formed in a thickness of 42 nm in an atmosphere of a gas mixture of Ar and oxygen (oxygen gas content in the sputtering gas: 34 vol%) at an applied power density of 2.4 W/cm² under a sputtering pressure of 0.3 Pa by means of a metal silicon target. The substrate was not heated.

### E) Formation of high refractive index film (niobium oxide film)

The remaining gas was discharged, and then, by a DC sputtering method, a niobium oxide film (refractive index at a wavelength of 550 nm: 2.31, extinction coefficient: 0) was formed in a thickness of 57 nm on the low refractive index film in an atmosphere of a gas mixture of Ar and oxygen (oxygen gas content in the sputtering gas: 10 vol%) at an applied power density of 3.3 W/cm² under a sputtering pressure of 0.3 Pa by means of a niobium oxide target. The substrate was not heated. The obtained laminate was evaluated in the same manner as in Example 1, and the results are shown in Table 2. In Example 9, the silver alloy film was oxidized and became a transparent film.

**TABLE 1**

| Ex. | Thickness (nm) of adhesion-improving film (GZO) | Presence or absence of introduction of oxygen at the time of formation of low refractive index film | Volume ratio (vol%) in sputtering gas at the time of formation of initial layer of low refractive index film | | | Power density (W/cm²) at the time of formation of initial layer of low refractive index film |
|---|---|---|---|---|---|---|
| | | | Ar | N₂ | O₂ | |
| 1 | 2 | Nil | 97 | 3 | - | 2.4 |
| 2 | 2 | Nil | 91 | 9 | - | 2.4 |
| 3 | 2 | Nil | 91 | 9 | - | 1.4 |
| 4 | 2 | Nil | 86 | 14 | - | 1.4 |
| 5 | 2 | Nil | 100 | 0 | - | 2.4 |
| 6 | 0 (No film) | Nil | 91 | 9 | - | 2.4 |
| 7 | 1 | Nil | 91 | 9 | - | 2.4 |
| 8 | 5 | Nil | 91 | 9 | - | 2.4 |
| 9 | 0 (No film) | Introduced | 66 | - | 34 | - |
| 10 | 1 | Introduced | 66 | - | 34 | - |
| 11 | 3 | Introduced | 66 | - | 34 | - |

**TABLE 2**

| Ex. | High temperature high humidity test (1) | High temperature test (2) | Adhesion (A) (3) | Film surface reflectance (4) | Adhesion (B) (5) |
|---|---|---|---|---|---|
| 1 | ○ | ○ | ○ | ○ | Δ |
| 2 | ○ | ○ | ○ | ○ | Δ |
| 3 | ○ | ○ | ○ | ○ | Δ |
| 4 | ○ | ○ | ○ | ○ | Δ |
| 5 | ○ | ○ | ○ | × | Δ |
| 6 | × | ○ | × | ○ | × |
| 7 | ○ | ○ | ○ | ○ | Δ |
| 8 | ○ | ○ | ○ | × | ○ |
| 9 | × | × | × | × | × |
| 10 | ○ | ○ | ○ | × | Δ |
| 11 | ○ | ○ | ○ | × | Δ |

The laminates in Examples 1 to 4 and 7 are excellent in the film surface reflectance, since the adhesion-improving film is thin, and since a sputtering gas containing a nitrogen gas is used at the time of forming the initial layer of the low refractive index film, whereby absorption of the adhesion-improving film is small. Further, they are excellent in durability such as moisture resistance and heat resistance by formation of the adhesion-improving film. They have a practically satisfactory level of adhesion in both tests of adhesion (A) and adhesion (B).

Whereas, in Example 5, since a sputtering gas containing no nitrogen is used at the time of forming the initial layer of the low refractive index film, absorption of the adhesion-improving film occurs, thus deteriorating the film surface reflectance.

The laminate in Example 6 is poor in durability such as adhesion and moisture resistance, since no adhesion-improving film is formed.

Further, the laminate in Example 8 has sufficient adhesion, but absorption of the adhesion-improving film is significant since the adhesion-improving film is so thick as 5 nm, thus deteriorating the film surface reflectance.

The laminate in Example 9 has a remarkably poor film surface reflectance, since oxygen is introduced at the time of forming the low refractive index film, whereby the silver alloy film is oxidized and becomes a transparent film.

In the laminates in Examples 10 and 11, since the adhesion-improving film is formed, oxidation of the silver alloy film is suppressed to a certain extent and the silver alloy film does not become a transparent film, but they are poor in the film surface reflectance, since oxygen is introduced at the time of forming the low refractive index film.

### EXAMPLES 12 to 14

A soda lime glass substrate having a thickness of 1.1 mm was cleaned and set in a batch-system sputtering apparatus, and as targets, a zinc-doped indium oxide target (zinc oxide content: 10.7 mass%, indium oxide content: 89.3 mass%), an Au-doped silver alloy target (Au content: 1 at%, silver content: 99 at%), a silica target (SiO₂ content: 99.9 at%) and an oxygen-deficient niobium oxide target (Nb₂O₅₋ₓ (X=0 to 1)) were respectively set at positions opposing to the substrate, and the interior of the vacuum chamber was evacuated to 8×10⁻⁴ Pa. Then, the following films A) to E) were sequentially formed to obtain a laminate.

### A) Formation of underlayer (zinc-doped indium oxide film)

By an RF sputtering method, a zinc-doped indium oxide film was formed in a thickness of 6 nm on the glass substrate in an Ar gas atmosphere at an applied power density of 1.6 W/cm² under a sputtering pressure of 0.3 Pa by means of a zinc-doped indium oxide target. The substrate was not heated. The composition of the zinc-doped indium oxide film was equal to the target.

### B) Formation of silver alloy film

The remaining gas was discharged, and then, by a DC sputtering method, a silver alloy film was formed in a thickness of 100 nm on the underlayer in an Ar gas atmosphere at an applied power density of 1.4 W/cm² under a sputtering pressure of 0.3 Pa by means of an Au-doped silver alloy target. The substrate was not heated. The composition of the silver alloy film was equal to the target.

### C) Formation of adhesion-improving film (zinc-doped indium oxide film)

The remaining gas was discharged, and then, by an RF sputtering method, a zinc-doped indium oxide film (refractive index at a wavelength of 550 nm: 1.99, extinction coefficient: 0.015) was formed in a thickness as identified Table 3 on the silver alloy film in an Ar gas atmosphere at an applied power density of 0.5 W/cm² under a sputtering pressure of 0.3 Pa by means of a zinc-doped indium oxide target. The substrate was not heated. The composition of the zinc-doped indium oxide film was equal to the target.

### D) Formation of low refractive index film (silicon oxide film)

The remaining gas was discharged, and then, by an RF sputtering method, a silicon oxide film was formed in a thickness of 3 nm as an initial layer of the low refractive index film on the adhesion-improving film in an atmosphere of a gas mixture of Ar and nitrogen (nitrogen gas content in the sputtering gas: 9 vol%) at an applied power density of 2.4 W/cm² under a sputtering pressure of 0.3 Pa by means of a silica target. The substrate was not heated. Then, the remaining gas was discharged, and then, by an RF sputtering method, a silicon oxide film (refractive index at a wavelength of 550 nm: 1.47, extinction coefficient: 0) was formed in a thickness of 41 nm in an Ar gas atmosphere (containing no oxygen) at an applied power density of 2.4 W/cm² under a sputtering pressure of 0.3 Pa by means of a silica target. The substrate was not heated.

### E) Formation of high refractive index film (niobium oxide film)

The remaining gas was discharged, and then, by a DC sputtering method, a niobium oxide film (refractive index at a wavelength of 550 nm: 2.31, extinction coefficient: 0) was formed in a thickness of 57 nm on the low refractive index film in an atmosphere of a gas mixture of Ar and oxygen (content of oxygen gas in the sputtering gas: 10 vol%) at an applied power density of 3.3 W/cm² under a sputtering pressure of 0.3 Pa by means of a niobium oxide target. The substrate was not heated. The laminate was evaluated in the same manner as in Example 1, and the results are shown in Table 4.

### EXAMPLE 15 (Comparative Example)

A laminate was formed in the same manner as in Example 12 except that the thickness of the adhesion-improving film was 5 nm. The laminate was evaluated in the same manner as in Example 1, and the results are shown in Table 4.

### EXAMPLE 16 (Comparative Example)

A laminate was formed in the same manner as in Example 13 except that as the initial layer of the low refractive index film, a silicon oxide film was formed in a thickness of 3 nm by an RF sputtering method in an Ar gas atmosphere (i.e. an atmosphere containing no nitrogen) at an applied power density of 2.4 W/cm² under a sputtering pressure of 0.3 Pa by means of a silica target. The laminate was evaluated in the same manner as in Example 1, and the results are shown in Table 4.

**TABLE 3**

| Ex. | Thickness (nm) of adhesion-improving film (IZO) | Presence or absence of introduction of oxygen at the time of formation of low refractive index film | Volume ratio (vol%) in sputtering gas at the time of formation of initial layer of low refractive index film | | | Power density (W/cm²) at the time of formation of initial layer of low refractive index film |
|---|---|---|---|---|---|---|
| | | | Ar | N₂ | O₂ | |
| 12 | 1 | Nil | 91 | 9 | - | 2.4 |
| 13 | 2 | Nil | 91 | 9 | - | 2.4 |
| 14 | 3 | Nil | 91 | 9 | - | 2.4 |
| 15 | 5 | Nil | 91 | 9 | - | 2.4 |
| 16 | 2 | Nil | 100 | 0 | - | 2.4 |

**TABLE 4**

| Ex. | High temperature high humidity test (1) | High temperature test (2) | Adhesion (A) (3) | Film surface reflectance (4) | Adhesion (B) (5) |
|---|---|---|---|---|---|
| 12 | ○ | ○ | ○ | ○ | ○ |
| 13 | ○ | ○ | ○ | ○ | ○ |
| 14 | ○ | ○ | ○ | ○ | ○ |
| 15 | ○ | ○ | ○ | × | ○ |
| 16 | ○ | ○ | ○ | × | ○ |
| 12 | ○ | ○ | ○ | ○ | ○ |

The laminates in Examples 12 to 14 are excellent in the film surface reflectance since the adhesion-improving film is thin, and since a sputtering gas containing nitrogen gas is used at the time of forming the initial layer of the low refractive index film, whereby absorption of the adhesion-improving film is small. Further, they are excellent in durability such as moisture resistance and heat resistance, by formation of the adhesion-improving film. Further, they are particularly excellent in adhesion since a zinc-doped indium oxide film is used as the adhesion-improving film.

Whereas, the laminate in Example 15 is poor in the film surface reflectance, since the adhesion-improving film is so thick as 5 nm, whereby absorption of the adhesion-improving film is significant.

Further, in Example 16, the laminate is poor in the film surface reflectance since a sputtering gas containing no nitrogen is used at the time of forming the initial layer of the low refractive index film, whereby absorption of the adhesion-improving film occurs.

### INDUSTRIAL APPLICABILITY

The laminate of the present invention is useful as a laminate to be used for a backlight module for a small liquid crystal display such as a projection TV or a cell-phone.

The entire disclosures of Japanese Patent Application No. 2005-220927 filed on July 29, 2005 and Japanese Patent Application No. 2006-123827 filed on April 27, 2006 including specifications, claims, drawings and summaries are incorporated herein by reference in their entireties.

## Claims

1. A laminate comprising a substrate, and a silver film, an adhesion-improving film, a low refractive index film and a high refractive index film formed in this order on the substrate, wherein at least a layer on the adhesion-improving film side in the low refractive index film is formed by a sputtering method using a sputtering gas containing nitrogen, the adhesion-improving film has an extinction coefficient of at most 0.1 and has a thickness of from 0.5 to 4 nm, the low refractive index film has an extinction coefficient of at most 0.01, and the high refractive index film has an extinction coefficient of at most 0.01.

2. The laminate according to Claim 1, wherein at least the layer on the adhesion-improving film side in the low refractive index film has a thickness of from 1 to 5 nm.

3. The laminate according to Claim 1 or 2, wherein the nitrogen content in the sputtering gas is from 5 to 20 vol% based on the entire sputtering gas.

4. The laminate according to Claim 1, 2 or 3, wherein the silver film is a film of an alloy of silver and gold.

5. The laminate according to Claim 4, wherein the gold content in the silver film is from 0.5 to 10 at%.

6. The laminate according to any one of Claims 1 to 5, wherein the main component of the material of the low refractive index film is silicon oxide.

7. The laminate according to any one of Claims 1 to 6, wherein the material of the high refractive index film is at least one member selected from the group consisting of niobium oxide, zirconium oxide, tantalum oxide, hafnium oxide, titanium oxide and tin oxide.

8. The laminate according to any one of Claims 1 to 6, wherein the material of the high refractive index film is niobium oxide.

9. The laminate according to any one of Claims 1 to 8, wherein the material of the adhesion-improving film is at least one member selected from the group consisting of zinc oxide, tin oxide, indium oxide, aluminum oxide and titanium oxide.

10. The laminate according to Claim 9, wherein the adhesion-improving film is a zinc oxide film, the zinc oxide film contains other metal, and other metal is at least one member selected from the group consisting of gallium, tin, silicon and titanium.

11. The laminate according to Claim 10, wherein the content of other metal is from 2 to 10 mass% in total based on all the metal elements in the zinc oxide film as calculated as oxides.

12. The laminate according to Claim 9, wherein the adhesion-improving film is an indium oxide film, and the indium oxide film contains zinc.

13. The laminate according to Claim 12, wherein the zinc content is from 5 to 15 mass% based on all the metal elements in the adhesion-improving film.

14. The laminate according to any one of Claims 1 to 13, wherein an underlayer is formed on the substrate side of the silver film, the underlayer has a geometrical thickness of from 1 to 20 nm, and the material of the underlayer is at least one member selected from the group consisting of zinc oxide, tin oxide, indium oxide, aluminum oxide, titanium oxide, niobium oxide and chromium oxide.

15. The laminate according to any one of Claims 1 to 14, wherein the silver film, the adhesion-improving film, the high refractive index film and the underlayer are formed by a sputtering method.

16. The laminate according to any one of Claims 1 to 15, wherein the silver film has a thickness of from 60 to 200 nm, the low refractive index film has a thickness of from 25 to 60 nm, and the high refractive index film has a thickness of from 35 to 70 nm.

17. A display using the laminate as defined in any one of Claims 1 to 16 as a reflection member for a light source of the display.

18. A process for producing a laminate which comprises laminating a silver film, an adhesion-improving film, a low refractive index film and a high refractive index film in this order on a substrate, wherein at least a layer on the adhesion-improving film side in the low refractive index film is formed by a sputtering method using a sputtering gas containing nitrogen, the adhesion-improving film has an extinction coefficient of at most 0.1 and has a thickness of from 0.5 to 4 nm, the low refractive index film has an extinction coefficient of at most 0.01, and the high refractive index film has an extinction coefficient of at most 0.01.
